# EUROPEAN PATENT APPLICATION

(11) **EP 4 338 596 A2**
(43) Date of publication of application: **20.03.2024**
(21) Application number: 23172710.8
(22) Date of filing: 15.04.2019
(51) Int. Cl.: A23K 20/10

(54) **CAROTENOID COLOURING COMPOSITION**

(30) Priority: 23.04.2018 EP 18168698
(62) Divisional of application: 19716445.2
(71) Applicant: Oterra A/S, 2970 Hørsholm (DK)
(72) Inventor: Goury, Laura, 2970 Hørsholm (DK); Drelon, Marie, 2970 Hørsholm (DK)
(74) Representative: Willnegger, Eva

(57) **Abstract**

The present invention relates to a composition for coloring foods, animal feeds, cosmetics or pharmaceuticals comprising carotenoids. The present invention further relates to a method for preparing the coloring composition.

## Description

### FIELD OF THE INVENTION

The present invention relates to a composition for coloring foods, animal feeds, cosmetics or pharmaceuticals comprising carotenoids. The present invention further relates to a method for preparing the coloring composition.

### BACKGROUND OF THE INVENTION

Carotenoids are well known as food coloring agents, and have hues varying between yellow and red.

The carotenoids, as a class, have relatively low chemical stability, and this causes problems when using the carotenoids as coloring agents in the food industry as once a desired hue is obtained, said hue often change when the food colored with the carotenoid is processed, for example by means of pasteurization.

Various strategies for dealing with stability problems have been suggested in the prior art.

EP 2887823 relates to a water-dispersible colorant formulation comprising a mixture of (a) a solid-in- liquid dispersion of one or more carotenoids with (b) a liquid-in-liquid dispersion of one or more carotenoids wherein the liquid in liquid dispersion comprises a carotenoid mixed in an oil, dispersed in an aqueous solution comprising one or more of a sugar ester, a saponin, a fatty polyglycerol ester, a hydrocolloid and a polyol.

US 5364563 discloses a novel process for producing powdered carotenoid preparations, in which a suspension of a carotenoid in a high-boiling oil is brought into contact with superheated steam during a maximum period of 30 seconds, and subsequently emulsified the liquefied solution of said carotenoid in oil produced by said contact with superheated steam in an aqueous solution of a colloid and then spraying and drying said emulsion to a powder.

US 4844934 discloses that water-dispersible carotenoid formulations are prepared by dissolving the carotenoid in a carrier oil at elevated temperatures until saturation is achieved, rapidly emulsifying the solution with an aqueous protective colloid and then removing the water, by a process in which the protective colloid used is a mixture of an ester of a long-chain fatty acid with ascorbic acid and a starch product which is soluble in cold water. The product can be used for coloring foods.

US 5968251 discloses that carotenoid preparations in the form of cold water-dispersible powders are produced by a) preparing a molecular-disperse solution of a carotenoid, with or without an emulsifier and/or an edible oil, in a volatile, water-miscible, organic solvent at elevated temperature and adding therein an aqueous solution of a protective colloid, whereupon the hydrophilic solvent component is transferred into the aqueous phase, and the hydrophobic phase of the carotenoid results as nanodisperse phase, b) heating the resulting hydrosol at from 40°C to 90°C, with or without cooling of the hydrosol to from 0°C to 30°C beforehand, and c) removing the solvent and the water from the heated hydrosol, and converting it into a water-dispersible dry powder.

None of the above-mentioned pieces of prior art solves the problem of color shifting in a satisfying way.

Thus, there remains a need for alternative and improved carotenoid coloring compositions that prevents color shifting during harsh heat treatment such as pasteurization.

### SUMMARY OF THE INVENTION

It is thus the aim of the present invention to provide an improved coloring composition comprising a carotenoid which does not make a color shift when added to a food, feed, cosmetic product or pharmaceutical products which are heat treated.

The present inventors have unexpectedly found that mixing carotenoids with a phospholipid emulsifier comprising a low amount of phosphatidylcholine (PC) in combination with a second emulsifier produces a highly heat stable formulation. This formulation was found to be stable during heat treatment such as pasteurization whereby no color shifts were seen.

It has further been found that it is possible to obtain a high strength color composition comprising high amounts of pigment resulting in better cost efficiency, as less of the coloring composition has to be added to the product to be colored than normally.

A first aspect of the present invention relates to a coloring composition comprising
a) a carotenoid;
b) a phospholipid emulsifier comprising less than 50% phosphatidylcholine (PC); and
c) a second emulsifier.

A second aspect of the present invention relates to a coloring composition comprising
a) a carotenoid;
b) a phospholipid emulsifier comprising less than 50% phosphatidylcholine (PC); and
c) a polysorbate.

A third aspect of the present invention relates to a method for preparing a liquid coloring composition comprising the steps of
a) mixing a carotenoid pigment in the form of solid particles with water and a phospholipid emulsifier comprising less than 50% phosphatidylcholine and a second emulsifier;
b) obtaining a homogenous liquid coloring composition; and
c) milling the liquid coloring composition.

A fourth aspect of the present invention relates to a method of coloring a food or a feed with a coloring composition comprising
a) a carotenoid;
b) a phospholipid emulsifier comprising less than 50% phosphatidylcholine (PC); and
c) a second emulsifier.

A fifth aspect of the present invention is directed to a food product, an animal feed, a cosmetic or a pharmaceutical product comprising the coloring composition according to the first or the second aspect of the present invention.

A sixth aspect of the present invention relates to use of the coloring composition according to the first and second aspect of the present invention as a colorant for foods, animal feeds, cosmetics or pharmaceuticals.

### DETAILED DESCRIPTION OF THE INVENTION

The present invention is directed to a liquid coloring composition comprising carotenoids and a phospholipid emulsifier comprising less than 50% phosphatidylcholine (PC).

It has surprisingly been found that using phospholipid emulsifiers with phosphatidylcholine content below 50% w/w in liquid carotenoid coloring compositions in combination with a second emulsifier stabilize the carotenoids. Said compositions has shown remarkably good heat stability, further it has been found that it is possible to produce high strength coloring formulations with high amounts of pigments which gives a better cost effectiveness.

Occasionally food grade or pharmaceutically acceptable coloring agents are provided that contain coloring substances in the form of synthetic or artificial compounds having substantially the same chemical composition as natural occurring coloring agents. These types of coloring agents are also referred to in the art as "nature identical" colors. In the present context, the expressions "naturally occurring coloring agents" and "natural pigments" also include "nature identical" colors.

As known in the art β-carotene is an example of a pigment that may be obtained directly from a natural source and/or be a so-called nature identical color.

Carotenoids from natural sources as well as their nature-identical counterparts may be used. Carotenoids as used herein comprises carotenes or structurally related polyene compounds, such as xanthophylls, which can be used as a colorant for foods, animal feeds, cosmetics or pharmaceutical. Examples of such carotenoids are o-carotene, β-carotene, gamma-carotene, apocarotenals such as 8'-apo-beta-carotenal, 8'-apo-beta-carotenoic acid esters such as ethyl ester, canthaxanthin, astaxanthin, saffron, lycopene, lutein, zeaxanthin or crocetin, crocin, bixin, capsanthin, capsorubin, rubixanthin, violaxanthin, rhodoxanthin cis/trans isomers thereof and combinations thereof. In a preferred embodiment the preferred carotenoid is beta-carotene, in particular natural beta-carotene.

In a particular embodiment of the present invention the carotenoids are food grade or pharmaceutically acceptable coloring agents derived from a natural source. Thus, the pigment may either be in a substantially pure form or it may be contained in a material where it occurs naturally such as part a plant or an animal material, optionally in combination with a food grade and/or pharmaceutically acceptable carrier.

The amounts of carotenoids in the liquid coloring composition is in a particular embodiment at least 1%, 2%, 5%, 7%, 10%, 12%, 14% w/w of total composition. In a particular embodiment the amount of carotenoids in the liquid composition is between 1 to 25%, 2 to 22%, 5 to 20%, 7 to 18% w/w of total composition.

The carotenoid particles may comprise amorph carotenoid as well as crystalline carotenoid. Preferably, the carotenoid particles comprise 100% crystalline carotenoid.

In preferred embodiments, the average size of the solid carotenoid particles is at the most 1000 nm, such as 500 nm, such as at the most 300 nm, such as at the most 200 nm, such as at the most 180 nm, such as at the most 150 nm. In a particular embodiment the particle size is above 100 nm.

In relation to measurement of size of the particles a Zetasizer were used in the examples herein. Another suitable apparatus for measuring particle size includes a Malvern MasterSizer.

Suitable phospholipid emulsifiers in the present invention are lecithins. The lecithin may originate from sunflower, soybeans, rapeseed, cottonseed, egg yolk, milk and marine sources. In a particular embodiment of the present invention the lecithin is sunflower lecithin, rapeseed lecithin and/or soybean lecithin. In a preferred embodiment the phospholipid emulsifier is sunflower lecithin.

In a particular embodiment of the present invention the lecithin is an enzymatically hydrolyzed phospholipid, such as an enzymatically hydrolyzed lecithin.

In a particular embodiment of the present invention the phospholipid emulsifier comprises less than 45% PC, such as less than 45% PC, such as less than 40% PC, such as less than 35% PC, such as less than 30% PC, such as less than 25% PC.

The second emulsifier may be but are not limited to one of the following emulsifiers citric acid esters, glycerol ester of fatty acids, monoglycerides, diglycerides, triglycerides, ethoxylated monoglycerides, polyglycerol ester of fatty acids, glycerol ester of fatty acids, sorbitan esters of fatty acids, sucrose esters of fatty acids, polysorbate, quillaja extract, hydrocolloids and mixtures thereof.

In a particular embodiment of the present invention the second emulsifier is selected from the group consisting of quillaja extract and polysorbate

Polysorbates are oily liquids derived from ethoxylated sorbitan (a derivative of sorbitol) esterified with fatty acids. Common brand names for polysorbates include Scattics, Alkest, Canarcel, and Tween.

The polysorbate may e.g. be polysorbate 20, polysorbate 40, polysorbate 60, polysorbate 65, polysorbate 80 or a mixture thereof. In a particular embodiment of the present invention the polysorbate is polysorbate 80.

Suitable examples of polysorbate include polysorbate with E-numbers: E 431, E 432, E 433, E 434, E 435 or E 436.

In a preferred embodiment of the present invention the amount of phospholipid emulsifier present in the liquid coloring composition is at least 0.5% (w/w), such as at least 1% (w/w), such as at least 1.5% (w/w), such as at least 2% (w/w), such as at least 2.5% (w/w), such as at least 3% (w/w), such as at least 3.5% (w/w), such as at least 4% (w/w), such as at least 5% (w/w), such as at least 6% (w/w.

In a preferred embodiment of the present invention the amount of phospholipid emulsifier present in the liquid coloring composition is less than 20% (w/w), such as less than 15% (w/w), such as less than 13% (w/w), such as less than 10% (w/w), such as less than 9% (w/w), such as less than 8% (w/w), such as less than 7% (w/w), such as less than 6% (w/w), such as at least 5% (w/w), such as less than 4% (w/w), such as less than 3% (w/w).

In a particular embodiment of the present invention the amount of phospholipid emulsifier of the coloring composition is between 0.5 to 20% (w/w), such as between 1 to 15% (w/w), such as between 2 to 10% (w/w), such as between 3 to 8 % (w/w).

In a preferred embodiment of the present invention the total amount of emulsifier present in the liquid coloring composition is at least 3% (w/w), such as at least 4% (w/w), such as at least 5% (w/w), such as at least 7% (w/w), such as at least 9% (w/w), such as at least 10% (w/w), such as at least 11% (w/w), such as at least 12% (w/w), such as at least 13% (w/w), such as at least 14% (w/w), and such as at least 15% (w/w).

In a preferred embodiment of the present invention the total amount of emulsifier present in the liquid coloring composition is less than 40% (w/w), such as less than 35% (w/w), such as less than 30% (w/w), such as less than 28% (w/w), such as less than 25% (w/w), such as less than 23% (w/w), such as less than 20% (w/w), such as less than 19% (w/w), such as at least 18% (w/w), such as less than 17% (w/w), and such as less than 16% (w/w).

Preferably, the amount of total emulsifier used is from about 3% to 30% (w/w), such as from about 5% to 23% (w/w), such as from 10% to 18% (w/w).

The ratio (w/w) of total emulsifier to carotenoid may be in the range of 1:4 to 4:1, such as 1:3 to 3:1. In a preferred embodiment of the invention the ratio (w/w) between emulsifier to pigment is selected in the range of 1:2 to 2:1.

Other ingredients added may include hydrocolloids, sugar and organic acids.

Suitable hydrocolloids may be caseinate, such as sodium caseinate, calcium caseinate or acid casein, acacia gum, gum arabic, beet pectin, starch or starch derivatives such as starch octenyl succinate derivative or any mixtures thereof.

Antioxidants, preferable ascorbic acid, alpha-tocopherol or mixed tocopherols, may be added to the coloring composition.

Antimicrobials such as organic acids or salts thereof, e.g. sorbic acid, acetic acid, benzoic acid, may be used to inhibit growth of microorganisms during storage.

Preferably, the composition further comprises an emulsion stabilizer. Suitably, the emulsion stabilizer may be selected from the group consisting of maltodextrin, sucrose, glucose, fructose, lactose, maltose, invert sugar and combinations thereof.

Other additives may be carbohydrates such as glucose syrup, dextrose or sugar, or organic acids, antioxidants and antimicrobials.

The amount of water in the liquid coloring composition is preferably between 30 to 80% (w/w), such as between 35 to 75% (w/w), such as preferably between 45 to 70 % (w/w).

The method for preparing the liquid coloring composition comprises steps of
a) mixing a carotenoid pigment in the form of solid particles with water and a phospholipid emulsifier comprising less than 50% phosphatidylcholine and a second emulsifier;
b) obtaining a homogenous liquid coloring composition; and
c) milling the liquid coloring composition.

In a particular embodiment the carotenoids are milled. In a particular embodiment of the present invention the carotenoids are milled to a particle size below 1000 nm, such as below 500 nm, such as below 300 nm, such as below 200 nm, such as below 180.

In a particular embodiment the liquid coloring composition is also heated. The method may comprise a heating step. In a particular embodiment the heating step is a pasteurization.

The coloring composition of the present invention may find use as colorant for products such as food products, animal feeds, cosmetics and pharmaceutical products.

In a preferred embodiment, the food product is selected from the group consisting of a beverage, wine gum, marmalade, jam, sugar confectionary, panned chocolate lentils, ice cream, sausage casings, pasta, macaroni, cheese, dairy fruit prep, prepared food and/or extruded food.

The coloring composition of the present invention may be added to the product either as an aqueous stock solution or a pre-blend with other suitable ingredients according to the specific application. Mixing may be carried out e.g. using a low shear mixer, a high pressure homogenizer or a high shear mixer depending on the formulation of the final application. Mixing procedure and amount of oily or aqueous ingredients may impact the color of the final application.

The coloring composition is particularly useful in low pH applications such as in application where pH of the product is below 7, such as below 6, such as below 5, such as below 4, or even below a pH of 3. Most food products are in the acidic range and a specific useful application includes coloring of beverage products. In beverage products the pH is typically around 2-6 and the beverage product is therefore preferably a beverage product, wherein the pH is from pH 2 to 6.

In a particular embodiment the product is heat treated after color treatment.

Heat treatment may encompass but are not limited to pasteurization, blanching and canning (commercial sterilization). In a particular embodiment the product is heat treated with a temperature of 58°C or above, in a more particular embodiment the product is heat treated with a temperature above 70°C and even more particular the product is heat treated with a temperature above 90°C.

The following items are preferred embodiments of the present invention:
Item 1. A liquid coloring composition comprising:
   a) a carotenoid;
   b) water;
   c) a phospholipid emulsifier comprising less than 50% phosphatidylcholine;
      and
   d) a second emulsifier.
Item 2. The liquid coloring composition according to item 1, wherein the carotenoid is selected from the group consisting of alfa-carotene, beta-carotene, gamma-carotene, apocarotenals such as 8'-apo-beta-carotenal, 8'-apo-beta-carotenoic acid esters such as ethyl ester, canthaxanthin, astaxanthin, saffron, lycopene, lutein, zeaxanthin or crocetin, crocin, bixin, capsanthin, capsorubin, rubixanthin, violaxanthin, rhodoxanthin cis/trans isomers thereof and combinations thereof.
Item 3. The liquid coloring composition according to any of the preceding items, wherein the carotenoid is in crystalline form.
Item 4. The liquid coloring composition according to item 3, wherein the carotenoid is beta-carotene.
Item 5. The liquid coloring composition according to item 3, wherein the carotenoid is natural beta-carotene.
Item 6. The liquid coloring composition according to any of the preceding items, wherein the phospholipid emulsifier is lecithin.
Item 7. The liquid coloring composition according to item 6, wherein the lecithin is selected from the group consisting of sunflower, soybean, rape seed, cottonseed, egg yolk, milk and marine sources.
Item 8. The liquid coloring composition according to item 7, wherein the lecithin is sunflower lecithin.
Item 9. The liquid coloring composition according to any of the preceding items, wherein the lecithin comprises less than 45% of phosphatidylcholine.
Item 10. The liquid coloring composition according to any of the preceding items, wherein the lecithin comprises less than 40% of phosphatidylcholine.
Item 11. The liquid coloring composition according to any of the preceding items, wherein the lecithin comprises less than 35% of phosphatidylcholine.
Item 12. The liquid coloring composition according to any of the preceding items, wherein the lecithin comprises less than 30% of phosphatidylcholine.
Item 13. The liquid coloring composition according to any of the preceding items, wherein the lecithin comprises less than 25% of phosphatidylcholine.
Item 14. The liquid coloring composition according to any of items 2 to 13, wherein the second emulsifier is selected from the group consisting of citric acid ester, glycerol ester of fatty acid, monoglyceride, diglyceride, triglyceride, ethoxylated monoglyceride, polyglycerol ester of fatty acid, glycerol ester of fatty acids, sorbitan esters of fatty acids, sucrose esters of fatty acids, polysorbate, quillaja extract, hydrocolloids and mixtures thereof.
Item 15. The liquid coloring composition according to item 14, wherein the second emulsifier is polysorbate or quillaja.
Item 16. The liquid coloring composition according to item 15, wherein the polysorbate is selected from polysorbate 60 and polysorbate 80.
Item 17. The liquid coloring composition according to any of the preceding items, wherein the total amount of emulsifier is less than 24% w/w of the total composition.
Item 18. The liquid coloring composition according to any of the preceding items, wherein the total amount of emulsifier is less than 20% w/w of the total composition.
Item 19. The liquid coloring composition according to any of the preceding items, wherein the total amount of emulsifier is at least 3% w/w of the total composition.
Item 20. The liquid coloring composition according to any of the preceding items, wherein the total amount of emulsifier is at least 5% w/w of the total composition.
Item 21. The liquid coloring composition according to any of the preceding items, wherein the total amount of emulsifier is at least 10% w/w of the total composition.
Item 22. The liquid coloring composition according to any of the preceding items, wherein the amount of emulsifier is between 3 and 30% w/w of the total composition.
Item 23. The liquid coloring composition according to any of the preceding items, wherein the amount of emulsifier is between 5 and 23% w/w of the total composition.
Item 24. The liquid coloring composition according to any of the preceding items, wherein the amount of emulsifier is between 10 and 18% w/w of the total composition.
Item 25. The liquid coloring composition according to any of the preceding items, wherein the amount of the phospholipid emulsifier is less than 15 % w/w of total liquid coloring composition.
Item 26. The liquid coloring composition according to any of the preceding items, wherein the amount of the phospholipid emulsifier is at least 0.5% w/w of total liquid coloring composition.
Item 27. The liquid coloring composition according to any of the preceding items, wherein the amount of the phospholipid emulsifier is at least 1% w/w of total amount of liquid coloring composition.
Item 28. The liquid coloring composition according to any of the preceding items, wherein the amount of phospholipid emulsifier is between 1 and 15% and amount of a second emulsifier is between 1 and 20%.
Item 29. The liquid coloring composition according to any of the preceding items, wherein the amount of the phospholipid emulsifier is at least 1% w/w of total amount of liquid coloring composition and the amount of total emulsifier is above 7% w/w of total liquid coloring composition.
Item 30. The liquid coloring composition according to any of the preceding items, wherein the pH is below 5.5.
Item 31. The liquid coloring composition according to any of the preceding items, wherein the pH is between 2 and 5.
Item 32. The liquid coloring composition according to any of the preceding items, wherein the particle size is below 1000 nm.
Item 33. The liquid coloring composition according to any of the preceding items, wherein the particle size is below 500 nm.
Item 34. The liquid coloring composition according to any of the preceding items, wherein the particle size is below 180 nm.
Item 35. The liquid coloring composition according to any of the preceding items, further comprising an antioxidant.
Item 36. The liquid coloring composition according to any of the preceding items, further comprising a preservative.
Item 37. The liquid coloring composition according to any of the preceding items, further comprising glycerol.
Item 38 A method for preparing a liquid coloring composition of any of the preceding items comprising the steps of
   a) mixing a carotenoid pigment in the form of solid particles with water and a phospholipid emulsifier comprising less than 50% phosphatidylcholine and a second emulsifier;
   b) obtaining a homogenous liquid coloring composition; and
   c) milling the liquid coloring composition.
Item 39. The method according to item 38, wherein the particle size of the carotenoid is less than 1000 nm after milling.
Item 40. The method according to item 38, wherein the particle size of the carotenoid is less than 500 nm after milling.
Item 41. The method according to item 38, wherein the particle size of the carotenoid is less than 300 nm after milling.
Item 42. The method according to item 38, wherein the particle size of the carotenoid is less than 180 nm after milling
Item 43. The method of according to any of the items 38 to 42 further comprising the step of heat treating the liquid coloring composition.
Item 44. The method of item 43, wherein the heat treating is done by pasteurization.
Item 45. A method of coloring a food product comprising mixing the coloring composition of any of items 1 to 36 with a food product.
Item 46. A food product, an animal feed, a cosmetic or a pharmaceutical product comprising the liquid coloring composition according to any of items 1 to 36.
Item 47. The food product according to item 46, wherein the food product is a beverage, wine gum, marmalade, jam, sugar confectionary, panned chocolate lentils, ice cream, sausage casings, pasta, macaroni, cheese, dairy fruit prep, prepared food or extruded foods.
Item 48. The food product according to any of the preceding items 46 to 47, wherein the food product has been heat treated.
Item 49. The food product according to item 48, wherein the product is being heat treated by pasteurization
Item 50. Use of the liquid coloring composition according to any of items 1 to 37 as a colorant for a food product, an animal feed, a cosmetic or a pharmaceutical product.
Item 51. Use according to item 50, wherein the food product is a beverage.

Embodiments of the present invention are described below, by way of non-limiting examples.

### EXAMPLES

Before milling, the particle size of the premix was measured with a mastersizer.

### Mastersizer:

A Mastersizer 2000 is used to determine the particle size when the size is above 1 µm. Few drops of the liquid color were added in 40mL of demineralized water. This solution was put in the Mastersizer. A laser light passed through the suspension of particles, light was scattered in angle directly related to particle size.

During milling, the particle size was measured with a Zetasizer.

### Zetasizer:

The Zetasizer is used to determine the Z-average (Z-ave) particle size and PDI (polydispersity index) size when the size is from 1nm to 1 µm.

One drop of the liquid color was added in 40 mL of demineralized water. This solution was put in the Zetasizer. A laser passed through the solution and the intensity fluctuations due to Brownian movements is measured and converted to size.

Strength was measured with a UV-spectrophotometer UV-1800.

The lightness, chroma and hue were obtained with a Datacolor 650.

### Method for Beverage application (for all examples):

The liquid color was tested in beverage application in soft drink base (SD):
- soft drink
- Brix = 11.0°Bx
- pH = 3.0
- [Ascorbic acid] = 250ppm
- dosage of color = 0.025 g/L

A heat treatment was applied on each prototype:
- 92°C for 40 seconds on colored beverage

A staining test was made on each bottle and evaluated after two weeks:
- Vertical bottles / 40°C / dark / 14 days

The color was evaluated using two apparatus:
- Spectrocolorimetric measurements (Datacolor Spectraflash 650 SF Spectrocolorimetre)
- Turbidity measurements (Turbiquant 3000IR)

### Example 1

The aim of this example was to show that the formulation with polysorbate and sunflower lecithin was stable over time.

### Composition of liquid color formulation:

| Ingredient | A wt% |
|---|---|
| Nature Identical Betacarotene | 16 |
| Polysorbate 80 | 12 |
| Sunflower Lecithin 20% | 3 |
| Ascorbic acid | 3 |
| Potassium sorbate | 0.1 |
| Acetic acid | 1.2 |
| Demineralized water | 64.7 |

All ingredients were added one by one in a tank and then mixed with a high-shear mixer until obtaining a homogeneous liquid color. When the solution was homogeneous and pigment well-dispersed, the solution was run through a laboratory ball mill.

The liquid color was milled in two steps:
Coarse milling: during the first milling step, the mill was equipped with 270 mL of beads having a diameter of 0.7-0.9 mm and a slit of 0.2 mm in the chamber.

The liquid color was milled until having a particle size below 300 nm.

Fine milling: during the second milling step, the mill was equipped with 300 mL of beads having a diameter of 0.35-0.45 mm and a slit of 0.1 mm in the chamber.

The liquid color was milled until having a particle size below 180 nm.

Mill is a Multilab mill from WAB.

Beads were zirconium oxide from Saint-Gobain.

After 12 months of storage at 4°C, the sample was still stable (see table 1).

**Table 1. Stability results of liquid color after one year**

| | Months | Strength | L* | C* | h* | DE2000 | Zave | PDi |
|---|---|---|---|---|---|---|---|---|
| A | 0 | 14.67 | 68.61 | 56.77 | 52.13 | - | 150.5 | 0.232 |
| | 12 | 14.38 | 68.48 | 56.15 | 52.3 | 0,23 | 153.2 | 0.231 |

### Beverage application

There was no shifting of shade and no staining on the bottle after heat-treatment in soft drink. The sample was stable to heat-treatment (see table 2).

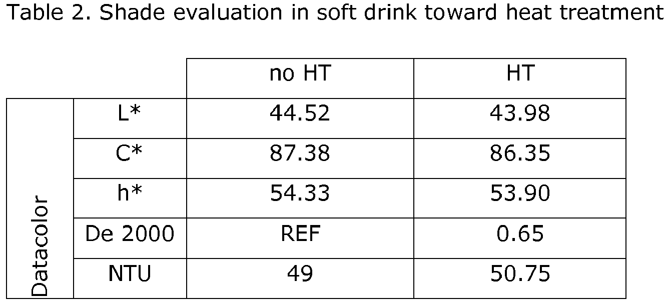

### Example 2

The aim of this example was to show that with different ratios between the two emulsifiers (sunflower lecithin and polysorbate), there was no shifting of shade after heat treatment in beverage application.

### Composition of liquid color formulations:

| Ingredient | A wt% | B wt% | C wt% |
|---|---|---|---|
| Nature Identical Beta-carotene | 16 | 16 | 16 |
| Polysorbate 80 | 6 | 7.5 | 13.12 |
| Sunflower Lecithin 20% | 9 | 7.5 | 1.88 |
| Ascorbic acid | 3 | 3 | 3 |
| Potassium sorbate | 0.1 | 0.1 | 0.1 |
| Acetic acid | 1.2 | 1.2 | 1.2 |
| Demineralized water | 64.7 | 64.7 | 64.7 |

All ingredients were added one by one in a tank and then mixed with a high-shear mixer until obtaining a homogeneous liquid color. When the solution was homogeneous and pigment well-dispersed, the solution was run through a laboratory ball mill.

The liquid color was milled in two steps:
Coarse milling: during the first milling step, the mill was equipped with 270 mL of beads having a diameter of 0.7-0.9 mm and a slit of 0.2 mm in the chamber.

The liquid color was milled until having a particle size below 300 nm.

Fine milling: during the second milling step, the mill was equipped with 300 mL of beads having a diameter of 0.35-0.45 mm and a slit of 0.1 mm in the chamber.

The liquid color was milled until having a particle size below 180 nm.

The mill used was a Multilab mill from WAB.

Beads were zirconium oxide from Saint-Gobain.

Milling for all recipes was successful (see table 3).

**Table 3. Characterization of liquid colors after milling**

| | A | B | C |
|---|---|---|---|
| L* | 67.23 | 66.74 | 67.51 |
| C* | 53.92 | 54.13 | 54.66 |
| h* | 46.93 | 47.4 | 50.42 |
| Strength | 15.64 | 14.93 | 15.51 |
| Z-ave (nm) | 154.7 | 155.9 | 148.3 |
| PDi | 0.175 | 0.208 | 0.210 |

### Beverage application

There was no shifting of shade and no staining on the bottle after heat-treatment. To conclude, all samples were stable to heat-treatment (see table 4).

**Table 4. Shade evaluation in soft drink toward heat treatment**

| Sample | A | | B | | C | |
|---|---|---|---|---|---|---|
| Ready-to-drink pasteurization | No | 92°C/40s | No | 92°C/40s | No | 92°C/40s |
| Lightness | 40.07 | 39.73 | 40.71 | 40.09 | 41.74 | 41.52 |
| Chroma | 79.77 | 78.91 | 81.51 | 80.02 | 82.70 | 81.76 |
| Hue angle | 51.93 | 51.05 | 52.12 | 51.41 | 53.49 | 53.16 |
| DE*2000 | Ref. | 0.78 | Ref. | 0.85 | Ref. | 0.39 |
| Turbidity (NTU) | 48.92 | 51.34 | 49.29 | 52.00 | 50.32 | 50.30 |

### Example 3

The aim of this example was to show that with different ratios between two emulsifiers (sunflower lecithin and polysorbate), there was no shifting of shade after heat treatment in beverages application.

### Composition of liquid color formulations:

| Ingredient | A wt% | B wt% | C wt% | D wt% | E wt% |
|---|---|---|---|---|---|
| Nature Identical Betacarotene | 16 | 16 | 16 | 16 | 16 |
| Polysorbate 80 | 2.25 | 4.5 | 5.63 | 9 | 9.84 |
| Sunflower Lecithin 20% | 9 | 6.75 | 5.63 | 2.25 | 1.41 |
| Ascorbic acid | 3 | 3 | 3 | 3 | 3 |
| Potassium sorbate | 0.1 | 0.1 | 0.1 | 0.1 | 0.1 |
| Acetic acid | 1.2 | 1.2 | 1.2 | 1.2 | 1.2 |
| Demineralized water | 68.45 | 68.45 | 68.45 | 68.45 | 68.45 |

All ingredients were added one by one in a tank and then mixed with a high-shear mixer until obtaining a homogeneous liquid color. When the solution was homogeneous and pigment well-dispersed, the solution was run through a laboratory ball mill.

The liquid color was milled in two steps:
Coarse milling: during the first milling step, the mill was equipped with 270 mL of beads having a diameter of 0.7-0.9 mm and a slit of 0.2 mm in the chamber.

The liquid color was milled until having a particle size below 300 nm.

Fine milling: during the second milling step, the mill was equipped with 300 mL of beads having a diameter of 0.35-0.45 mm and a slit of 0.1 mm in the chamber.

The liquid color was milled until having a particle size below 180 nm.

The mill was a Multilab mill from WAB.

Beads were zirconium oxide from Saint-Gobain.

Milling for all recipes was successful (see table 5).

**Table 5. Characterization of liquid colors after milling**

| | A | B | C | D | E |
|---|---|---|---|---|---|
| L* | 66.88 | 67.92 | 67.13 | 68.93 | 69.03 |
| C* | 56.15 | 55.16 | 53.45 | 54.61 | 54.34 |
| h* | 46.64 | 48.72 | 46.93 | 51.19 | 51.78 |
| Strength | 15.07 | 15.52 | 15.20 | 15.28 | 15.05 |
| Z-ave | 147.2 | 158.7 | 166 | 155.2 | 154.9 |
| PDi | 0.19 | 0.207 | 0.202 | 0.223 | 0.194 |

### Beverage Application

There was no shifting of shade and no staining on the bottle after heat-treatment. To conclude, all samples were stable to heat-treatment (see table 6).

**Table 6. Shade evaluation in soft drink toward heat treatment**

| Sample | A | | B | | C | |
|---|---|---|---|---|---|---|
| Ready-to-drink pasteurization | No | 92°C/40s | No | 92°C/40 s | No | 92°C/40 s |
| Lightness | 41.46 | 40.44 | 41.07 | 40.70 | 39.44 | 38.44 |
| Chroma | 82.58 | 79.77 | 81.66 | 80.60 | 78.47 | 76.32 |
| Hue angle | 51.94 | 50.71 | 52.54 | 51.55 | 51.14 | 50.28 |
| DE*2000 | Ref. | 1.47 | Ref. | 0.88 | Ref. | 1.19 |
| Turbidity (NTU) | 46.47 | 50.49 | 44.84 | 47.83 | 50.99 | 53.68 |

| Sample | D | | E | | | |
|---|---|---|---|---|---|---|
| Ready-to-drink pasteurization | No | 92°C/40s | No | 92°C/40s | | |
| Lightness | 42.03 | 41.83 | 42.39 | 41.52 | | |
| Chroma | 82.81 | 81.98 | 83.21 | 81.14 | | |
| Hue angle | 53.43 | 53.12 | 53.67 | 53.23 | | |
| DE*2000 | Ref. | 0.35 | Ref. | 0.96 | | |
| Turbidity (NTU) | 49.62 | 51.12 | 51.26 | 52.24 | | |

### Example 4

The aim of this example was to show that with different ratios between two emulsifiers (sunflower lecithin and polysorbate), there was no shifting of shade after heat treatment in beverages application.

### Composition of liquid color formulations:

| Ingredient | A wt% | B wt% | C wt% |
|---|---|---|---|
| Nature Identical Betacarotene | 16 | 16 | 16 |
| Polysorbate 80 | 9 | 15 | 15.75 |
| Sunflower Lecithin 20% | 9 | 3 | 2.25 |
| Ascorbic acid | 3 | 3 | 3 |
| Potassium sorbate | 0.1 | 0.1 | 0.1 |
| Acetic acid | 1.2 | 1.2 | 1.2 |
| Demineralized water | 68.45 | 68.45 | 68.45 |

All ingredients were added one by one in a tank and then mixed with a high-shear mixer until obtaining a homogeneous liquid color. When the solution was homogeneous and pigment well-dispersed, the solution was run through a laboratory ball mill.

The liquid color was milled in two steps:
Coarse milling: during the first milling step, the mill was equipped with 270 mL of beads having a diameter of 0.7-0.9 mm and a slit of 0.2 mm in the chamber.

The liquid color was milled until having a particle size below 300 nm.

Fine milling: during the second milling step, the mill was equipped with 300 mL of beads having a diameter of 0.35-0.45 mm and a slit of 0.1 mm in the chamber.

The liquid color was milled until having a particle size below 180 nm.

The mill was a Multilab mill from WAB.

Beads were zirconium oxide from Saint-Gobain.

Milling for all recipes was successful (see table 7).

**Table 7. Characterization of liquid colors after milling**

| | A | B | C |
|---|---|---|---|
| L* | 66.1 | 68.43 | 68.55 |
| C* | 53.9 | 54.68 | 58.39 |
| h* | 46.59 | 51.18 | 53.33 |
| Strength | 14.90 | 15.06 | 14.68 |
| Z-ave | 158.9 | 154.3 | 151.5 |
| PDi | 0.188 | 0.216 | 0.210 |

### Beverage application

There was no shifting of shade and no staining on the bottle after heat-treatment. To conclude, all samples were stable to heat-treatment (see table 8).

**Table 8. Shade evaluation in soft drink toward heat treatment**

| Sample | A | | B | | C | |
|---|---|---|---|---|---|---|
| Ready-to-drink pasteurization | No | 92°C/40s | No | 92°C/40s | No | 92°C/40s |
| Lightness | 40.44 | 40.08 | 40.99 | 40.87 | 42.67 | 42.66 |
| Chroma | 80.91 | 79.82 | 81.49 | 80.99 | 84.53 | 83.79 |
| Hue angle | 51.77 | 51.06 | 53.11 | 52.96 | 54.28 | 54.17 |
| DE*2000 | Ref. | 0.68 | Ref. | 0.19 | Ref. | 0.18 |
| Turbidity (NTU) | 51.13 | 54.16 | 55.08 | 55.57 | 50.15 | 50.21 |

### Example 5

The aim of this example was to show that the liquid color can be preservative-free (removing of potassium sorbate and acetic acid) by adding glycerol.

### Composition of liquid color formulations:

| Ingredient | A wt% | B wt% | C wt% |
|---|---|---|---|
| Nature Identical Betacarotene | 16 | 16 | 16 |
| Polysorbate 80 | 12 | 7.5 | 15.75 |
| Sunflower Lecithin 20% | 3 | 7.5 | 2.25 |
| Ascorbic acid | 3 | 3 | 3 |
| Glycerol | 25 | 25 | 25 |
| Demineralized water | 41 | 41 | 38 |

All ingredients were added one by one in a tank and then mixed with a high-shear mixer until obtaining a homogeneous liquid color. When the solution was homogeneous and pigment well-dispersed, the solution was run through a laboratory ball mill.

The liquid color was milled in one step:

Fine milling: during this step, the milled was equipped with 300 mL of beads having a diameter of 0.35-0.45 mm and a slit of 0.1 mm in the chamber.

The liquid color was milled until having a particle size below 180 nm.

Mill was a Multilab mill from WAB.

Beads were zirconium oxide from Saint-Gobain.

Pasteurization was performed after milling: 72-75°C for 5 minutes.

**Table 9. Characterization of liquid colors after milling**

| | A | B | C |
|---|---|---|---|
| L* | 67.31 | 67.23 | 65.99 |
| C* | 54.13 | 54.27 | 55.86 |
| h* | 48.95 | 47.3 | 46.82 |
| Strength | 15.65 | 15.02 | 14.97 |
| Z-average | 144.8 | 146.2 | 143.1 |
| PDi | 0.204 | 0.19 | 0.196 |

### Beverage application

There was no shifting of shade and no staining on the bottle after heat-treatment. To conclude, all samples were stable to heat-treatment (see table 10) meaning that there was no negative impact of adding glycerol in the recipe.

The liquid color can, then, be formulated without preservative.

**Table 10. Shade evaluation in soft drink toward heat treatment**

| Sample | A | | B | | C | |
|---|---|---|---|---|---|---|
| Ready-to-drink pasteurization | No | 92°C/40s | No | 92°C/40 s | No | 92°C/40 s |
| Lightness | 37.26 | 37.43 | 36.65 | 36.68 | 37.02 | 36.87 |
| Chroma | 73.12 | 73.15 | 73.43 | 73.00 | 69.67 | 69.09 |
| Hue angle | 49.11 | 49.02 | 48.68 | 48.54 | 47.99 | 47.95 |
| DE*2000 | Ref. | 0.16 | Ref. | 0.15 | Ref. | 0.19 |
| Turbidity (NTU) | 67.09 | 67.58 | 66.10 | 66.53 | 72.6 | 72.86 |

### Example 6

The aim of this example was to show that Quillaja extract can be used as surfactant in combination with the sunflower lecithin (recipe A) and that the formulation can be preservative-free by adding glycerol (recipe B).

### Composition of liquid color formulations:

| Ingredient | A wt% | B wt% |
|---|---|---|
| Nature Identical Betacarotene | 16 | 16 |
| Quillaja extract | 60 | 52.88 |
| Sunflower Lecithin 20% | 3 | 3 |
| Ascorbic acid | 3 | 3 |
| Acetic acid | 1.2 | |
| Potassium sorbate | 0.1 | |
| Antifoam | 0.12 | 0.12 |
| Glycerol | | 25 |
| Demineralized water | 16.58 | |

All ingredients were added one by one in a tank and then mixed with a high-shear mixer until obtaining a homogeneous liquid color. When the solution was homogeneous and pigment well-dispersed, the solution was run through a laboratory ball mill.

The liquid color was milled in two steps:
Coarse milling: during the first milling step, the mill was equipped with 270 mL of beads having a diameter of 0.7-0.9 mm and a slit of 0.2 mm in the chamber.

The liquid color was milled until having a particle size below 300 nm.

Fine milling: during the second milling step, the mill was equipped with 300 mL of beads having a diameter of 0.35-0.45 mm and a slit of 0.1 mm in the chamber.

The liquid color was milled until having a particle size below 180 nm.

The mill was a Multilab mill from WAB.

Beads were zirconium oxide from Saint-Gobain.

Foam were observed because of the Quillaja extract present in the recipe but milling was still successful for both liquid colors (see table 11).

**Table 11. Characterization of liquid colors after milling**

| | A | B |
|---|---|---|
| L* | 66.03 | 66.93 |
| C* | 57 | 56.6 |
| h* | 46.71 | 48.7 |
| Strength | 15.02 | 14.7 |
| Z-ave | 154.7 | 155.8 |
| PDi | 0.212 | 0.191 |

### Beverage application

There was no shifting of shade and no staining on the bottle after heat-treatment. To conclude, the two samples were stable to heat-treatment (see table 12).

Therefore, Quillaja extract can be used as emulsifier instead of polysorbate. The liquid color with Quillaja extract can be formulated with glycerol in order to be preservative-free.

**Table 12. Shade evaluation in soft drink toward heat treatment**

| Sample | A | | B | |
|---|---|---|---|---|
| Ready-to-drink pasteurization | No | 92°C/40s | No | 92°C/40s |
| Lightness | 37.26 | 37.43 | 36.65 | 36.68 |
| Chroma | 73.12 | 73.15 | 73.43 | 73.00 |
| Hue angle | 49.11 | 49.02 | 48.68 | 48.54 |
| DE*2000 | Ref. | 0.16 | Ref. | 0.15 |
| Turbidity (NTU) | 67.09 | 67.58 | 66.10 | 66.53 |

### Example 7

The aim of this example was to show that Natural Beta-carotene can be used instead of natural identical beta-carotene.

### Composition of liquid color formulations:

| Ingredient | A wt% | B wt% | C wt% |
|---|---|---|---|
| Natural Beta-carotene | 16 | 16 | 16 |
| Polysorbate 80 | 12 | 7.5 | 15.75 |
| Sunflower Lecithin 20% | 3 | 7.5 | 2.25 |
| Ascorbic acid | 3 | 3 | 3 |
| Glycerol | 25 | 25 | 25 |
| Demineralized water | 41 | 41 | 38 |

All ingredients were added one by one in a tank and then mixed with a high-shear mixer until obtaining a homogeneous liquid color. When the solution was homogeneous and pigment well-dispersed, the solution was run through a laboratory ball mill.

The liquid color was milled in one step:
Fine milling: during the second milling step, the milled was equipped with 300 mL of beads having a diameter of 0.35-0.45 mm and a slit of 0.1 mm in the chamber.

The liquid color was milled until having a particle size below 180 nm.

The mill was a Multilab mill from WAB.

Beads were zirconium oxide from Saint-Gobain.

A pasteurization was performed after milling: 72-75°C for 5 minutes.

Milling was successful with the Natural Beta-carotene (see table 13).

**Table 13. Characterization of liquid colors after milling**

| | A | B | C |
|---|---|---|---|
| L* | 66.39 | 66.55 | 65.72 |
| C* | 49.79 | 51.7 | 46.49 |
| h* | 44.49 | 43.8 | 42.46 |
| Strength | 15.79 | 15.75 | 15.39 |
| Z-ave | 148.9 | 141 | 148.2 |
| PDi | 0.179 | 0.214 | 0.215 |

### Beverage application

There was no shifting of shade and no staining on the bottle after heat-treatment for all samples (see table 14). To conclude, liquid colors with Natural Beta-carotene are stable toward heat treatment and can be formulated without preservatives.

**Table 14. Shade evaluation in soft drink toward heat treatment**

| Sample | A | | B | | C | |
|---|---|---|---|---|---|---|
| Ready-to-drink pasteurization | No | 92°C/40s | No | 92°C/40s | No | 92°C/40s |
| Lightness | 38.28 | 37.91 | 39.00 | 38.68 | 37.17 | 37.13 |
| Chroma | 73.80 | 72.88 | 76.73 | 76.03 | 71.82 | 71.46 |
| Hue angle | 49.56 | 49.32 | 49.8 | 49.54 | 48.88 | 48.81 |
| DE*2000 | Ref. | 0.42 | Ref. | 0.38 | Ref. | 0.10 |
| Turbidity (NTU) | 67.28 | 59.97 | 61.18 | 62.26 | 74.81 | 75.11 |

### Example 8

The aim of this example was to show that by using a phospholipid emulsifier with a high level of phosphatidylcholine, there was a shifting of shade after heat-treatment.

| Ingredient | A wt% | B wt% | C wt% | D wt% |
|---|---|---|---|---|
| Nature Identical Beta-carotene | 16 | 16 | 16 | 16 |
| Polysorbate 80 | 7.5 | 7.5 | 12 | 12 |
| Lecithin 16% | 7.5 | | | |
| Lecithin 30% | | 7.5 | | |
| Lecithin 50% | | | 3 | |
| Lecithin 90% | | | | 3 |
| Ascorbic acid | 3 | 3 | 3 | 3 |
| Acetic Acid 50% | | | 1.2 | 1.2 |
| Potassium sorbate | | | 0.1 | 0.1 |
| Glycerol | 25 | 25 | | |
| Demineralized water | 41 | 41 | 64.7 | 64.7 |

All ingredients were added one by one in a tank and then mixed with a high-shear mixer until obtaining a homogeneous liquid color. When the solution was homogeneous and pigment well-dispersed, the solution was run through a laboratory ball mill.

The liquid color was milled in one step.

Fine milling: during this step, the milled was equipped with 300 mL of beads having a diameter of 0.35-0.45 mm and a slit of 0.1 mm in the chamber.

The liquid color was milled until having a particle size below 180 nm.

Mill was a Multilab mill from WAB.

Beads were zirconium oxide from Saint-Gobain.

**Table 15. Characterization of liquid colors after milling**

| | A | B | C | D |
|---|---|---|---|---|
| L* | 66.55 | 67.88 | 69 | 68.43 |
| C* | 51.7 | 56.47 | 56.73 | 54.51 |
| h* | 43.8 | 49.55 | 53.22 | 51.92 |
| Strength | 15.75 | 15.93 | 13.82 | 14.8 |
| Z-ave (nm) | 141 | 131.6 | 150.8 | 151.6 |
| PDi | 0.214 | 0.196 | 0.211 | 0.228 |

### Beverage application

There was a shift of shade after heat-treatment for sample C and D with a high increase of the turbidity (see table 16). Samples became redder and cloudier. To conclude, the two samples A and B were stable to heat-treatment (see table 16) and samples C and D were not stable in beverages toward heat treatment.

To conclude, using a phospholipid emulsifier with a percentage of phosphatidylcholine at 50% or above is not successful in beverage application to avoid the shift of shade after heat-treatment.

**Table 16. Shade evaluation in soft drink toward heat treatment**

| Sample | A | | B | | C | | D | |
|---|---|---|---|---|---|---|---|---|
| Ready-to-drink pasteurization | No | 92°C/40 s | No | 92°C/40 s | No | 92°C/4 0s | No | 92°C/4 0s |
| Lightness | 40,71 | 40,09 | 43.41 | 42.23 | 41.75 | 36.67 | 44.44 | 37.73 |
| Chroma | 81,51 | 80,02 | 86.24 | 83.58 | 82.91 | 71.56 | 85.61 | 69.02 |
| Hue angle | 52,12 | 51,41 | 52.94 | 51.65 | 54.23 | 46.8 | 54.27 | 44.80 |
| DE*2000 | Ref. | 0,85 | Ref | 1.6 | Ref | 7.64 | Ref | 10.08 |
| Turbidity (NTU) | 49,29 | 52,00 | 46.88 | 50.22 | 52.30 | 66.29 | 52.85 | 72.1 |

### Example 9

The aim of this example was to show that enzymatically modified phospholipids can be used and no shifting of shade was observed after heat-treatment in beverages application.

| Inqredient | A wt% | B wt% |
|---|---|---|
| Nature Identical Beta-carotene | 16 | 16 |
| Polysorbate 80 | 7.5 | 7.5 |
| Sunflower Lecithin 20% | 7.5 | |
| Enzymatically hydrolyzed Lecithin | | 7.5 |
| Ascorbic acid | 3 | 3 |
| Glycerol | 25 | 25 |
| Demineralized water | 41 | 41 |

All ingredients were added one by one in a tank and then mixed with a high-shear mixer until obtaining a homogeneous liquid color. When the solution was homogeneous and pigment well-dispersed, the solution was run through a laboratory ball mill.

The liquid color was milled in one step:
Fine milling: during this step, the milled was equipped with 300 mL of beads having a diameter of 0.35-0.45 mm and a slit of 0.1 mm in the chamber.

The liquid color was milled until having a particle size below 180 nm.

Mill was a Multilab mill from WAB.

Beads were zirconium oxide from Saint-Gobain.

Pasteurization was performed after milling: 72-75°C for 5 minutes.

**Table 17. Characterization of liquid colors after milling**

| | A | B |
|---|---|---|
| L* | 66.55 | 66.72 |
| C* | 51.7 | 50.79 |
| h* | 43.8 | 43.9 |
| Strength | 15.75 | 14.22 |
| Z-ave (nm) | 141 | 134.9 |
| PDi | 0.214 | 0.184 |

### Beverage application:

There was no shifting of shade and no staining on the bottle after heat-treatment. Conclusion: the two samples were stable to heat-treatment (see table 18).

Therefore, enzymatically modified lecithin can be used as a phospholipid emulsifier comprising less than 50% phosphatidylcholine.

**Table 18. Shade evaluation in soft drink toward heat treatment**

| Sample | A | | B | |
|---|---|---|---|---|
| Ready-to-drink pasteurization | No | 92°C/40s | No | 92°C/40s |
| Lightness | 40,71 | 40,09 | 40.55 | 40.25 |
| Chroma | 81,51 | 80,02 | 78,57 | 77.58 |
| Hue angle | 52,12 | 51,41 | 50.46 | 50.12 |
| DE*2000 | Ref. | 0,85 | Ref. | 0.43 |
| Turbidity (NTU) | 49,29 | 52,00 | 61.55 | 62.30 |

### Example 10

The aim of this example was to show that phospholipids from different sources can be used and no shifting of shade was observed after heat-treatment in beverage application.

| Inqredient | A wt% | B wt% | C wt% |
|---|---|---|---|
| Nature Identical Beta-carotene | 16 | 16 | 16 |
| Polysorbate 80 | 12 | 12 | 12 |
| Sunflower Lecithin 16% | 3 | | |
| Soy Lecithin 12% | | 3 | |
| Rape lecithin 16% | | | 3 |
| Ascorbic acid | 3 | 3 | 3 |
| Glycerol | 25 | 25 | 25 |
| Demineralized water | 41 | 41 | 41 |

All ingredients were added one by one in a tank and then mixed with a high-shear mixer until obtaining a homogeneous liquid color. When the solution was homogeneous and pigment well-dispersed, the solution was run through a laboratory ball mill.

The liquid color was milled in one step:
Fine milling: during this step, the milled was equipped with 300 mL of beads having a diameter of 0.35-0.45 mm and a slit of 0.1 mm in the chamber.

The liquid color was milled until having a particle size below 180 nm.

Mill was a Multilab mill from WAB.

Beads were zirconium oxide from Saint-Gobain.

Pasteurization was performed after milling: 72-75°C for 5 minutes.

**Table 19. Characterization of liquid colors after milling**

| | A | B | C |
|---|---|---|---|
| L* | 65.61 | 66.5 | 67.78 |
| C* | 47.54 | 52.4 | 49.49 |
| h* | 42.79 | 45.47 | 46.19 |
| Strength | 14.78 | 15.48 | 15.66 |
| Z-ave (nm) | 143.8 | 144.1 | 137.8 |
| PDi | 0.205 | 0.214 | 0.21 |

### Beverage application

There was no shifting of shade and no staining on the bottle after heat-treatment. To conclude, the three samples were stable to heat-treatment (see table 20).

Therefore, it can be concluded that a phospholipid emulsifier from different sources can be used as emulsifier leading to a good stability of the liquid color in beverages.

**Table 20. Shade evaluation in soft drink toward heat treatment**

| Sample | A | | B | | C | |
|---|---|---|---|---|---|---|
| Ready-to-drink pasteurization | No | 92°C/40s | No | 92°C/40s | No | 92°C/40s |
| Lightness | 39.52 | 39.33 | 38.69 | 38.86 | 40.39 | 40.16 |
| Chroma | 76.02 | 75.2 | 75.3 | 74.68 | 77.28 | 75.95 |
| Hue angle | 49.67 | 49.38 | 49.32 | 48.94 | 50.68 | 50.24 |
| DE*2000 | Ref | 0.33 | Ref | 0.35 | Ref | 0.49 |
| Turbidity (NTU) | 65.40 | 65.67 | 65.83 | 66.01 | 64.63 | 65.55 |

## Claims

1. A liquid coloring composition comprising:
a) a carotenoid;
b) water;
c) a phospholipid emulsifier comprising less than 50% phosphatidylcholine; and
d) a second emulsifier.

2. The coloring composition according to any of the preceding claims, wherein the carotenoid is selected from the group consisting of alfa-carotene, beta-carotene, gamma-carotene, apocarotenals such as 8'-apo-beta-carotenal, 8'-apo-beta-carotenoic acid esters such as ethyl ester, canthaxanthin, astaxanthin, saffron, lycopene, lutein, zeaxanthin or crocetin, crocin, bixin, capsanthin, capsorubin, rubixanthin, violaxanthin, rhodoxanthin cis/trans isomers thereof and combinations thereof.

3. The liquid coloring composition according to any of the preceding claims, wherein the carotenoid is in crystalline form.

4. The liquid coloring composition according to any of the preceding claims, wherein the carotenoid is beta-carotene.

5. The liquid coloring composition according to any of the preceding claims, wherein the carotenoid is natural beta-carotene.

6. The liquid coloring composition according to any of the preceding claims, wherein the phospholipid emulsifier is lecithin.

7. The liquid coloring composition according to any of the preceding claims, wherein the phospholipid emulsifier is enzymatically hydrolyzed lecithin.

8. The liquid coloring composition according to claim 6 or 7, wherein the lecithin is selected from the group consisting of sunflower, soybean, rape seed, cottonseed, egg yolk, milk and marine sources.

9. The liquid coloring composition according to claim 6 or 7, wherein the lecithin is sunflower lecithin.

10. The liquid coloring composition according to any of the preceding claims, wherein the lecithin comprises less than 45% of phosphatidylcholine.

11. The liquid coloring composition according to any of the preceding claims, wherein the lecithin comprises less than 40% of phosphatidylcholine.

12. The liquid coloring composition according to any of the preceding claims, wherein the lecithin comprises less than 35% of phosphatidylcholine.

13. The liquid coloring composition according to any of the preceding claims, wherein the lecithin comprises less than 30% of phosphatidylcholine.

14. The liquid coloring composition according to any of the preceding claims, wherein the lecithin comprises less than 25% of phosphatidylcholine.

15. The liquid coloring composition according to any of the preceding claims, wherein the second emulsifier is selected from the group consisting of citric acid ester, glycerol ester of fatty acid, monoglyceride, diglyceride, ethoxylated monoglyceride, polyglycerol ester of fatty acid, glycerol ester of fatty acids, sorbitan esters of fatty acids, sucrose esters of fatty acids, polysorbate, quillaja extract and mixtures thereof.

16. The liquid coloring composition according to claim 15, wherein the second emulsifier is polysorbate or quillaja.

17. The liquid coloring composition according to claim 16, wherein the polysorbate is selected from polysorbate 60 and polysorbate 80.

18. The liquid coloring composition according to any of the preceding claims, wherein the total amount of emulsifier is less than 24% w/w of the total composition.

19. The liquid coloring composition according to any of the preceding claims, wherein the total amount of emulsifier is less than 20% w/w of the total composition.

20. The liquid coloring composition according to any of claims 1 to 17, wherein the total amount of emulsifier is at least 3% w/w of the total composition.

21. The liquid coloring composition according to any of claims 1 to 17, wherein the total amount of emulsifier is at least 5% w/w of the total composition.

22. The liquid coloring composition according to any of claims 1 to 17, wherein the total amount of emulsifier is at least 10% w/w of the total composition.

23. The liquid coloring composition according to any of claims 1 to 17, wherein the amount of emulsifier is between 3 and 30% w/w of the total composition.

24. The liquid coloring composition according to any of claims 1 to 17, wherein the amount of emulsifier is between 5 and 23% w/w of the total composition.

25. The liquid coloring composition according to any of claims 1 to 17, wherein the amount of emulsifier is between 10 and 18% w/w of the total composition.

26. The liquid coloring composition according to any of claims 1 to 25, wherein the amount of the phospholipid emulsifier is less than 15 % w/w of total liquid coloring composition.

27. The liquid coloring composition according to any of the preceding claims, wherein the amount of the phospholipid emulsifier is at least 0.5% w/w of total liquid coloring composition.

28. The liquid coloring composition according to any of the preceding claims, wherein the amount of the phospholipid emulsifier is at least 1% w/w of total amount of liquid coloring composition.

29. The liquid coloring composition according to any of the preceding claims, wherein the amount of phospholipid emulsifier is between 1 and 15% and the amount of the second emulsifier is between 1 and 20%.

30. The liquid coloring composition according to any of the preceding claims, wherein the amount of the phospholipid emulsifier is at least 1% w/w of total amount of liquid coloring composition and the amount of total emulsifier is above 7% w/w of total liquid coloring composition.

31. The liquid coloring composition according to any of the preceding claims, wherein the pH is below 5.5.

32. The liquid coloring composition according to any of the preceding claims, wherein the pH is between 2 and 5.

33. The liquid coloring composition according to any of the preceding claims, wherein the particle size is below 1000 nm.

34. The liquid coloring composition according to any of the preceding claims, wherein the particle size is below 500 nm.

35. The liquid coloring composition according to any of the preceding claims, wherein the particle size is below 180 nm.

36. The liquid coloring composition according to any of the preceding claims, further comprising an antioxidant.

37. The liquid coloring composition according to any of the preceding claims, further comprising a preservative.

38. The liquid coloring composition according to any of the preceding items, further comprising glycerol.

39. A method for preparing a liquid coloring composition of any of the preceding claims comprising the steps of
a) mixing a carotenoid pigment in the form of solid particles with water and a phospholipid emulsifier comprising less than 50% phosphatidylcholine and a second emulsifier;
b) obtaining a homogenous liquid coloring composition; and
c) milling the liquid coloring composition.

40. The method according to claim 39, wherein the particle size of the carotenoid is less than 1000 nm after milling.

41. The method according to claim 39, wherein the particle size of the carotenoid is less than 500 nm after milling.

42. The method according to claim 39, wherein the particle size of the carotenoid is less than 300 nm after milling.

43. The method according to claim 39, wherein the particle size of the carotenoid is less than 180 nm after milling

44. The method of according to any of the claims 39 to 43 further comprising the step of heat treating the liquid coloring composition.

45. The method of claim 44, wherein the heat treating is done by pasteurization.

46. A method of coloring a food product comprising mixing the coloring composition of any of claims 1 to 38 with a food product.

47. A food product, an animal feed, a cosmetic or a pharmaceutical product comprising the liquid coloring composition according to any of claims 1 to 38.

48. The food product according to claim 46, wherein the food product is a beverage, wine gum, marmalade, jam, sugar confectionary, panned chocolate lentils, ice cream, sausage casings, pasta, macaroni, cheese, dairy fruit prep, prepared food or extruded foods.

49. The food product according to any of the preceding claims 47 to 48, wherein the food product has been heat treated.

50. The food product according to claim 49, wherein the product is being heat treated by pasteurization

51. Use of the liquid coloring composition according to any of claims 1 to 38 as a colorant for a food product, an animal feed, a cosmetic or a pharmaceutical product.

52. Use according to claim 51, wherein the food product is a beverage.
